# EUROPEAN PATENT APPLICATION

(11) **EP 0 539 595 A1**
(43) Date of publication of application: **05.05.1993**
(21) Application number: 92908498.6
(22) Date of filing: 09.04.1992
(51) Int. Cl.: G06F 15/16, G06F 9/38, G06F 15/80

(54) **DATA PROCESSOR AND DATA PROCESSING METHOD**

(30) Priority: 09.04.1991 JP 76574/91
(71) Applicant: FUJITSU LIMITED, Kawasaki-shi, Kanagawa 211 (JP)
(72) Inventor: KATSUNO, Akira, Nakahara-ku Kawasaki-shi Kanagawa 211 (JP)
(74) Representative: Fane, Christopher Robin King
(86) International application number: JP9200447
(87) International publication number: WO9218935

(57) **Abstract**

In a parallel data processing system in which processor elements (PE) are arranged in a two-dimensional grid form, each PE includes 1-bit arithmetic means for 1-bit operand data, storage means for storing operand data and/or the result, and communication means for effecting communication with other PEs. A common bus for connecting PEs in a transverse (row) direction is disposed for each PE in a longitudinal (column) direction, or data transfer routes for connecting PEs in the transverse (row) direction are disposed, so as to effect communication between PEs of different columns. The PE in the longitudinal (column) direction is used for 1-word storage and 1-word operation, for example, and parallel operation is effected for each PE of each column. The present invention provides such a parallel data processor and parallel data processing method.

## Description

### Technical Field

The present invention relates to a data processing system and, more specifically, to a data processor for and a data processing method of performing parallel data processing at high speed.

### Background Art

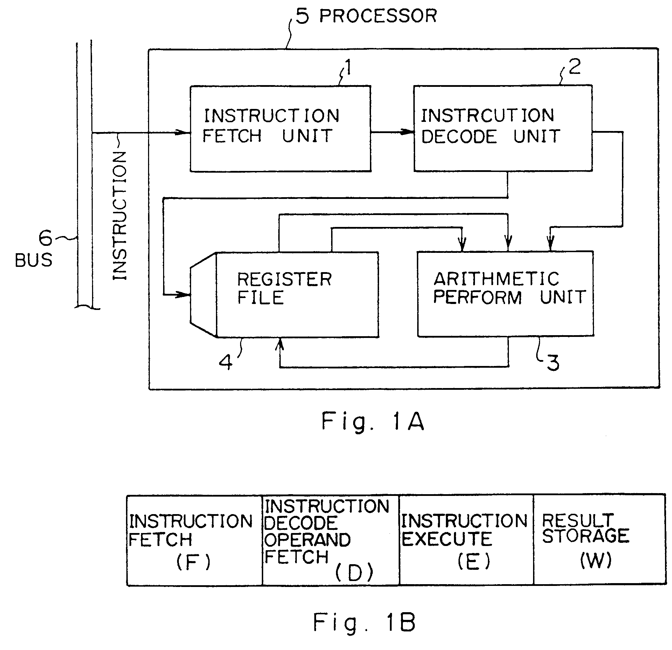

Data processors adapted for parallel processing have been developed recently in order to speed up data processing. Fig. 1 illustrates a prior art of such data processors. In Fig. 1A, a data processor 5 is constructed from an instruction fetch unit 1 for receiving an instruction externally input over a bus 6, an instruction decode unit 2 for decoding the received instruction, an operation execute unit 3 for reading operands out of a register file 4 and then performing arithmetic based on the received instruction, and the register file 4 for storing the result of the execution.

The processes of receiving the instruction from the bus 6, decoding it, performing arithmetic, and storing the result of the arithmetic in the register file 4 in Fig. 1A can be indicated by a four-stage pipeline operation as shown in Fig. 1B. That is, in the first prior art, the pipeline processing consists of four stages: an instruction fetch stage; an instruction decode and operand fetch stage; an instruction execute stage; and a result store stage. In the case of this system, therefore, parallel processing can be performed by providing the processor with a plurality of arithmetic perform units and a register file having multiple ports. However, since the number of storage locations in the register file 4 is larger than the number of the arithmetic units 3, it takes long to control which of the storage locations is to be accessed by an arithmetic unit 3. In addition, the number of bus lines which connect the arithmetic units 3 and the register file 4 becomes very large. For example, if three arithmetic units for 32-bit arithmetic operations are provided, then as many as 32 x 2 (two sets are needed for read and write) x 3 = 192 bus lines will be required however simply it is considered. Further, the routing of the bus lines becomes complicated, making an integrated circuit version difficult. If, on the other hand, the plural arithmetic units 3 and the register file 4 are connected by a common bus, then a large amount of data will flow through the common bus, so that von Neumann bottleneck occurs. Thus, there is a problem in that the instruction execute stage and the result store stage become slowed.

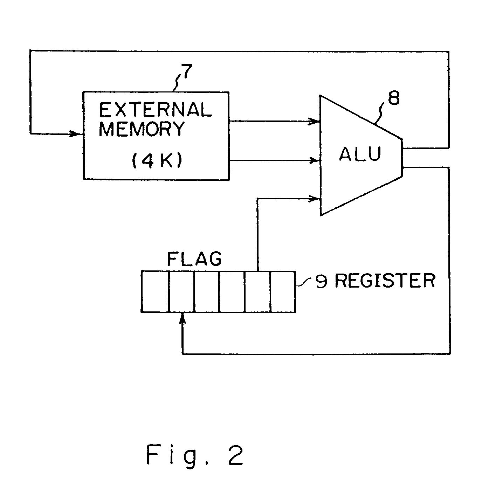

Fig. 2 illustrates a second prior art of data processors, which uses a logic-in memory system in which the arithmetic facility and the storage facility are integrated on the same chip and performs serial-by-bit arithmetic. The chip is composed of, say, 64K (2¹⁶) basic gate cells each comprising a 4K (2¹²)-bit external memory 7, a serial arithmetic and logic unit (ALU) 8, and an internal flag register 9. All the buses are 1 bit in width.

In Fig. 2, two pieces of data A and B stored in separate locations in the external memory 7 are read out as input data from the external memory 7 to the ALU 8, arithmetic is performed by the ALU 8, and the result is stored in the external memory 7 again. The flag register 9 generates a condition code for arithmetic to be performed by the ALU 8 and is used, for example, to store an overflow bit and a carry output, and re-enter a carry-in to the high-order bit into the ALU 8 when the result of arithmetic by the ALU 8 causes overflow.

In performing 32-bit arithmetic processing, by way of example, the prior art of Fig. 2 requires that a process of reading data to be operated on from the external memory 7 be performed 32 times and a process of writing the result into the memory be performed 32 times. Thus, a problem arises in that communication time between the external memory 7 and the ALU 8 becomes long, making speeding up of data processing impossible.

### Disclosure of Invention

It is an object of the present invention to provide a processor element which performs high-speed data communication with another processor element while circumventing von Neumann bottleneck and performs parallel data processing using the result of the communication, and an architecture of a data processing system using such processor elements.

It is the other object of the present invention to provide a parallel data processor suitable for a semiconductor integrated circuit version.

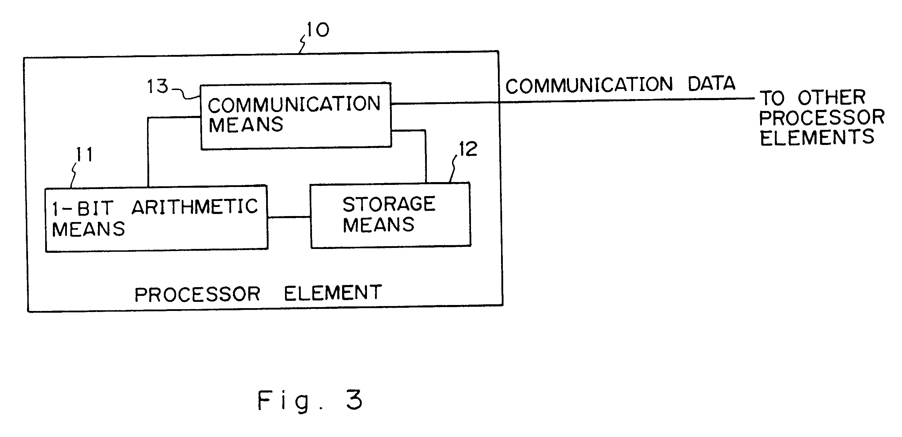

Fig. 1 is a block diagram illustrating fundamentals of a processor element as a data processor of the invention. As shown, a processor is equipped with a 1-bit arithmetic means 11 for performing arithmetic on 1-bit data to be operated on, e.g., a 1-bit arithmetic unit, storage means 12 for storing the data to be operated on and the result of the arithmetic by the 1-bit arithmetic means 11, e.g., a 1-bit memory unit, and communication means 13 for permitting communication between each of the 1-bit arithmetic means 11 and the storage means 12 and another processor element. In Fig. 3, the storage means 12 is incorporated into the processor element to construct a logic-in memory. Since the output of the 1-bit arithmetic means 11 is connected to the storage means 12, consisting of, for example, 1-bit memory, directly with no intervening bus, it becomes unnecessary to spend selecting a location to be written in within the storage means 12. Therefore, when the processor element performs pipeline operation, the result store (write) stage can be shortened considerably, improving arithmetic speed of the processor element.

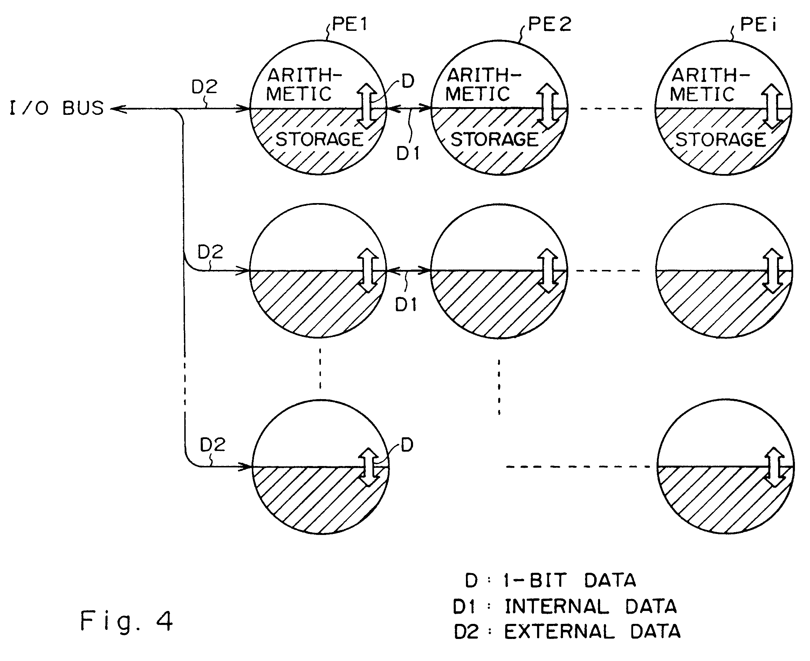

Fig. 4 is a diagram for use in explanation of a concept of data processing in a parallel data processing system in which processor elements, each configured as shown in Fig. 3, are arranged in a matrix. In the figure, suppose that 32 processor elements are arranged in each of the top-to-bottom and left-to-right directions and thus the total number of processor elements is 1024. Suppose that the processor elements arranged in the left-to-right direction are connected by, for example, a common data bus not shown, while the processor elements arranged in the top-to-bottom direction are connected by, for example, a data transfer line for transferring a carry, etc. Further, suppose that each of the processor element is connected to an I/O bus for inputting/outputting data from the outside of the system.

In Fig. 4, the processors in the top-to-bottom direction store, for example, 1-word data and perform arithmetic on that data. For example, each of the elements in a column stores a corresponding bit of 32-bit data, with the least significant bit stored in the lowest element in the column, and performs arithmetic on the stored bit.

In Fig. 4, from each of the processor elements PE1 in the leftmost column to a corresponding one of the 32 processor elements PE 2 in the second column from the left is transferred 1-bit internal data D1 stored in each processor using the common data bus not shown or inter-processor-element data transfer, or data D2 which is externally input over the I/O bus. Each of the elements PE2 performs arithmetic on the transferred data D1 or D2 and 1-bit data D stored in it. The result is stored in the storage means 12 in each of the elements PE2. Alternatively, the result of the arithmetic may be output to outside over the I/O bus as required.

In Fig. 4, when complicated processing requiring a pipeline process to be performed a large number of times is performed, the pipeline process can be speeded up by repeating, a required number of times, combined processes of fetching an externally input instruction, decoding it, transferring necessary data to each processor according to the result of the instruction decoding, performing arithmetic, and storing the result. Further, since processor elements each comprising 1-bit arithmetic means and storage means are arranged in the form of an array, the degree of parallelism can be much improved by performing parallel arithmetic for each word.

Since, as shown in Fig. 4, the arrangement of the processor elements and wiring among the processor elements is made regular, the data processor according to the present invention is suitable for an integrated circuit version.

### Brief Description of Drawings

Fig. 1A, B is a diagram explanatory of a first prior-art data processor;
Fig. 2 is a diagram explanatory of a second prior-art data processor;
Fig. 3 is a block diagram illustrating fundamentals of a processor element as a data processor of the present invention;
Fig. 4 is a diagram illustrating the concept of data processing in a parallel data processing system using the processor element of the present invention;
Fig. 5 is a block diagram of a first embodiment of the parallel data processing system;
Fig. 6 is a detailed block diagram of the processor element of Fig. 5;
Fig. 7 is a block diagram of an embodiment of a PE controller;
Fig. 8 is a block diagram of a second embodiment of the parallel data processing system;
Fig. 9 is a detailed block diagram of the processor element of Fig. 8;
Fig. 10 is a flowchart of an embodiment of the parallel data processing of the present invention;
Fig. 11 is a diagram for a supplemental explanation of the flowchart of Fig. 10;
Figs, 12A, 12B and 12C are diagrams for use in explanation of a pipeline process of the present invention; and
Fig. 13 is a diagram of a concrete example of arithmetic processing in an embodiment of the present invention.

### Best Mode of Carrying Out the Invention

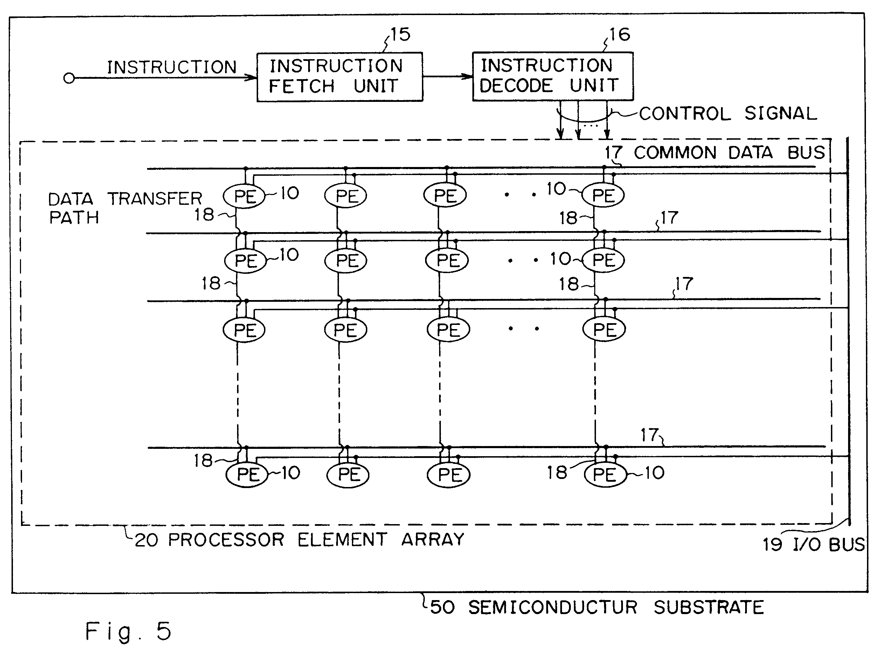

Fig. 5 is a block diagram of a first embodiment of a parallel data processing system according to the present invention. In the figure, processor elements 10 are arranged in the top-to-bottom and left-to-right directions to form a matrix. The top-to-bottom and left-to-right directions correspond to one word. For example, when one word is 32 bits, 32 processor elements 10 are arranged in a column. The processor elements 10 in each column permit parallel arithmetic. In the left-to-right direction a common data bus 17 is provided for processor elements (PE) in each row. In the top-to-bottom direction the PEs 10 are connected to each other by a data transfer line 18 for transferring a carry, etc., as will be described later. In common with the parallel processor elements are provided an instruction fetch unit 15 for acquiring an instruction input over an I/O bus 19 or a bus for instructions only, and an instruction decode unit 16 for decoding the instruction fetched. Each processor element performs communication with another processor element and arithmetic in accordance with control signals from the instruction decode unit 16. In order to transmit data to or receive data from outside, each processor element is also connected to the I/O bus 19. The instruction fetch unit 15, the instruction decode unit 16 and an array 20 of the processor elements can be formed on a semiconductor substrate 50 to form a semiconductor device. Since the arrangement of the processor elements 10, the common data buses 17 and the data transfer lines 18 has regularity, the semiconductor device is suitable for assembly onto one chip. The arrangement of the processor elements 10 in Fig. 5 corresponds to that on a chip. A controller, which will be described later in detail, for controlling each processor element 10 with control signals corresponding to an instruction decoded by the instruction decode unit 16 is provided for each of the PEs in the top-to-bottom direction, for example, corresponding to one word. The processor element array 20 shown in Fig. 5 permits arithmetic with at least a degree of parallelism corresponding to the number of the common data buses 17.

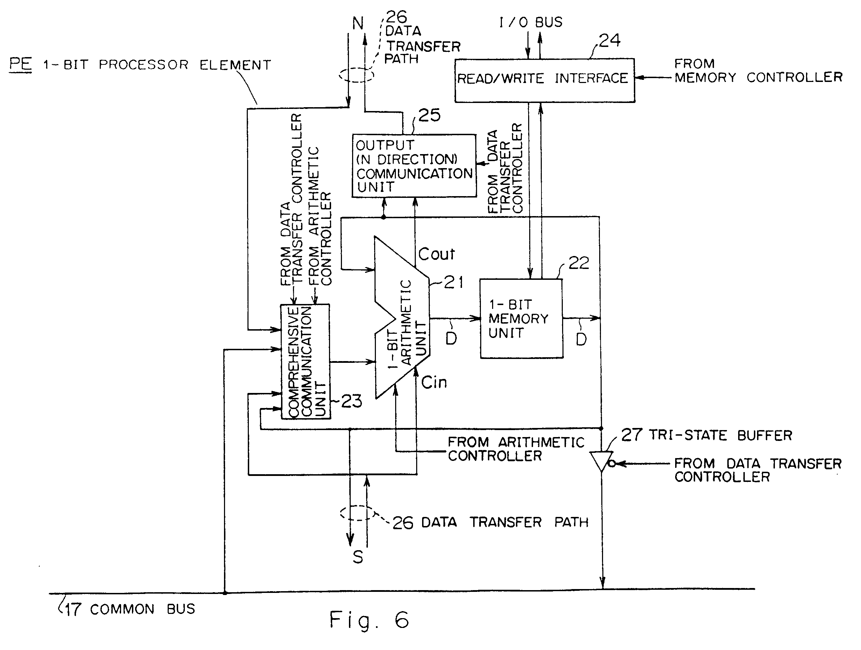

Fig. 6 is a block diagram of an embodiment of the processor element (PE) in Fig. 5. In the figure, the processor element 10 is constructed from a 1-bit arithmetic unit 21 for performing arithmetic on 1-bit data to be operated on, a 1-bit memory unit 22 for storing the result of the arithmetic, a common data bus 17, a comprehensive input communication unit 23 for selecting data input from the PE in the direction of north (N) or south (S) over data transfer line 26 or an output of the 1-bit memory unit 22 for application to the 1-bit arithmetic unit 21, a read/write interface 24 serving as an interface between the I/O bus for receiving or transmitting data from or to outside and the memory unit 22, an output communication unit 25 for selecting a carry output or data for bit shifting, etc., to be output onto the data transfer line 26 in the N direction, and a tri-state buffer 27 for outputting output data of the memory unit 22 onto the common bus 17. The 1-bit memory unit 22 may be a plural-bit memory for storing, say, three bits. The 1-bit arithmetic unit 21 may be an ALU having functions of, for example, a 3-input-2-output 1-bit full adder, a logical operation unit, and a shift operation unit. Each of the comprehensive input communication unit 23, the output communication unit 25 and the read/write interface 24 consist of a multiplexer for selecting among inputs according to a control signal from a controller 30.

In order to perform various processes in Fig. 6, many control signals are needed. First, in order to receive data to be operated on from outside or transmit the result of arithmetic to outside over the I/O bus, it is required to control the read/write interface 24. In order to output, for example, the result of arithmetic from the memory unit 22 onto the common bus 17, it is required to control the tri-state buffer 27. Depending upon the type of arithmetic, it will be required to control the 1-bit arithmetic unit 21. The result of arithmetic in the 1-bit arithmetic unit is stored in the 1-bit memory unit. For data transfers between PEs in the direction of a column, it is required to select a carry output or bit shift data under control of the output communication unit 25. In order to select among input data to the 1-bit arithmetic unit 21, it is required to control the input communication unit 23. Further, in order to transfer bit shift data, for example, from the S direction to the N direction via the input communication unit 23, the 1-bit arithmetic unit 21, 1-bit memory unit 22, and the output communication unit 25 without performing any process on it, control of the input communication unit 23 and the output communication unit 25 is also required simultaneously with arithmetic control of the 1-bit arithmetic unit 21. Bit shift data from the N direction can also be transferred in the S direction via the input communication unit 23, the 1-bit arithmetic unit 21, and the 1-bit memory 22.

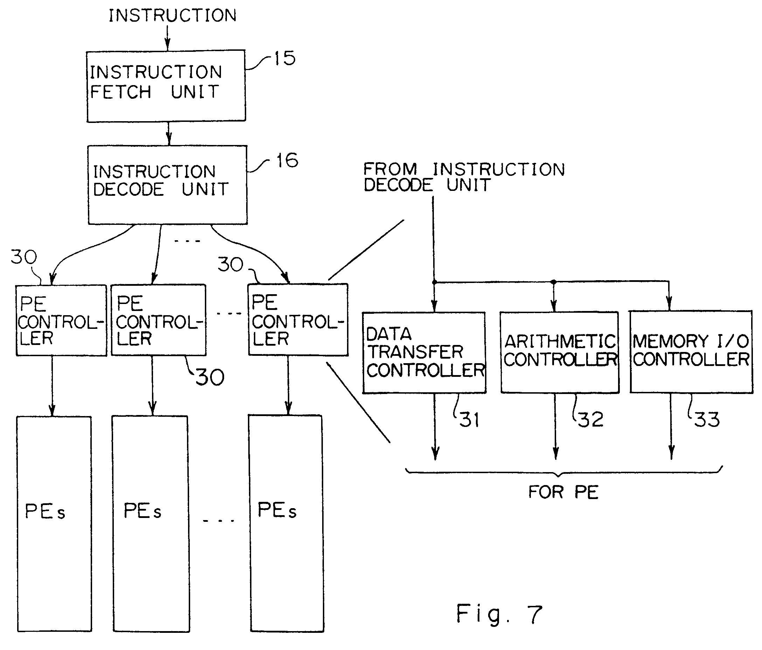

Fig. 7 is a block diagram of an embodiment of a PE controller for performing such control. As described above, the PEs in the vertical direction in Fig. 5 store 1-word data. In order to perform arithmetic on 1-word data, one PE controller 30 is provided for each group of processors arranged in the top-to-bottom (N - S) direction. Each PE controller 30 is connected to the instruction decode unit 16 and constructed from, in order to control data transfers on the common bus 17 and between the PEs, a data transfer controller 31 for outputting control signals to the input communication unit 23, the output communication unit 25, and the tri-state buffer 27, an arithmetic controller 32 for outputting control signals to the input communication unit 23 and the arithmetic unit 21 so as to control arithmetic in the 1-bit arithmetic unit 21, and a memory (I/O) controller 33 for outputting a control signal to the read/write interface 24 so as to control data transfer between the I/O bus and the 1-bit memory unit 22.

The operation of the processor element of Fig. 6 will be described more specifically with reference to the controllers 31, 32, 33 of Fig. 7. To the comprehensive input communication unit 23 are input data from the common bus 17 via a pipeline register (not shown) consisting of a 1-bit flip-flop FF, data for performing mainly a bit shift operation from the north-side processor element, and data for performing mainly a bit shift operation from the south-side processor element. In addition, an output of the 1-bit memory unit 22, which will be described later, is also input.

The output of the comprehensive input communication unit 23 is input to an input terminal of the 1-bit arithmetic unit 21. A 2-bit signal from the arithmetic controller 32 selects among arithmetic sources in the 1-bit arithmetic unit 21. The output D of the 1-bit arithmetic unit 21 is input to the 1-bit memory 22. The output of the 1-bit memory 22 is input to the second input of the 1-bit arithmetic unit 21. The 1-bit arithmetic unit 21 perform arithmetic using the first and second inputs. The result of the arithmetic is stored in the 1-bit memory 22. The output of the 1-bit memory unit 22 is further sent out to the north-side PE via the output communication unit A mainly as a bit shift operation.

The output of the 1-bit memory 22 is also sent out onto the common bus 17 via the tri-state buffer 27 and the pipeline register (not shown) and transmitted to a PE in the east or west along a row through the common bus 17. A carry-in signal from a south PE is input to the 1-bit arithmetic unit 21. A carry-out signal of the 1-bit arithmetic unit 21 is sent to a north PE via the output communication unit 25.

The output of the data transfer controller 31 is applied to the tri-state buffer 27 to control outputting of data onto the common bus 17. The output of the arithmetic controller 32 controls the type of arithmetic to be performed by the 1-bit arithmetic unit 21.

The output of the memory controller 33 is applied to the read/write interface 24 to control whether the output of the 1-bit memory unit 22 is to be output onto the I/O bus or the output of the I/O bus is to be input to the 1-bit memory unit 22.

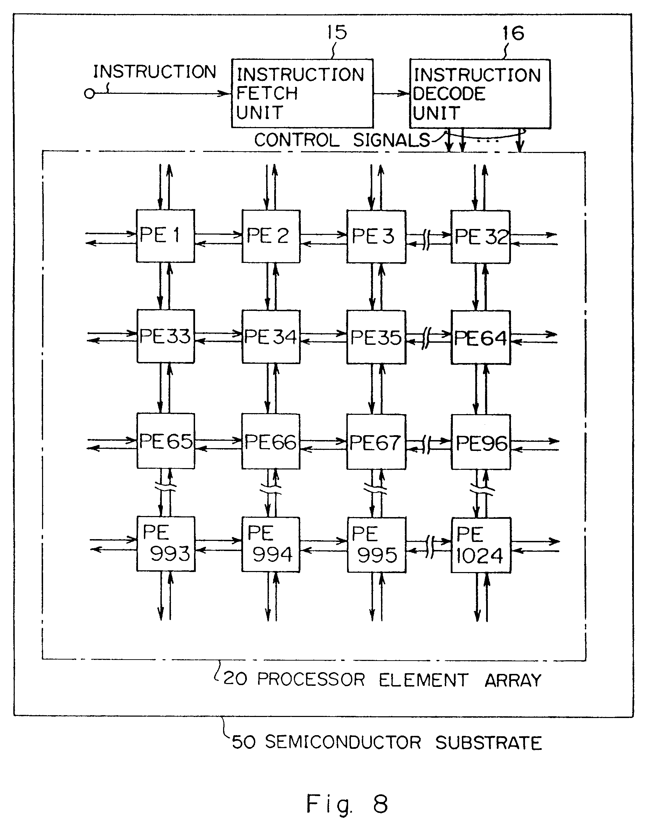

Fig. 8 is a block diagram of an embodiment of parallel data processing system according to a second embodiment of the present invention. Compared with the first embodiment of Fig. 5, the second embodiment of Fig. 8 is distinct from the first embodiment only in that there is no provision of common data buses 17 in the left-to-right direction for PEs arranged in a matrix, and correspondingly the PEs are connected by data transfer lines in the left-to-right direction as well. The PE controller of Fig. 5 is omitted. Although the I/O bus 19 is wired as in Fig 5, it is omitted from this block diagram.

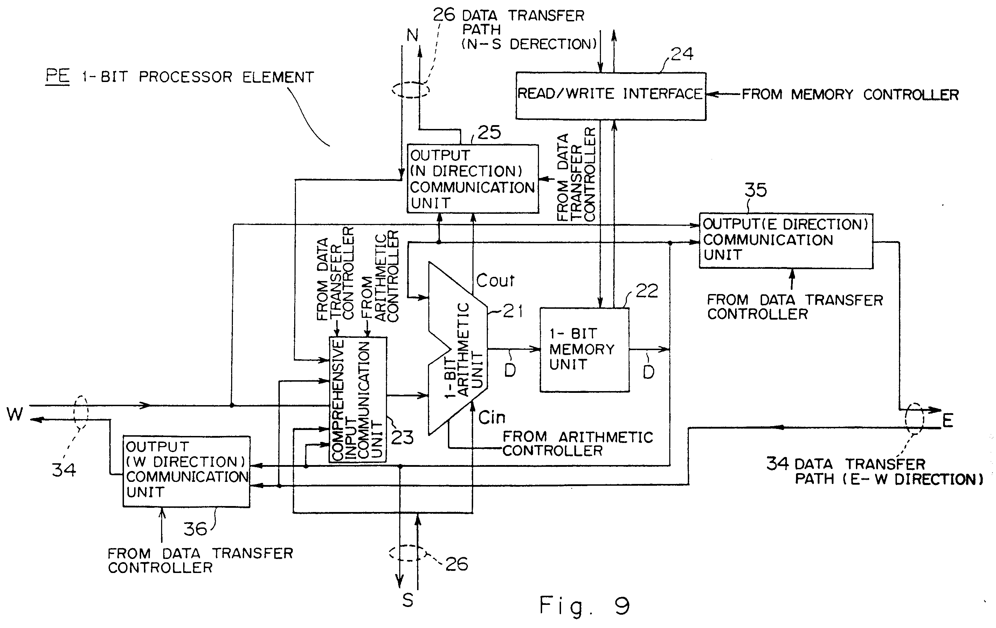

Fig. 9 is a block diagram of an embodiment of a processor element (PE) in Fig. 8. Compared with the embodiment of Fig. 6, the embodiment of Fig. 9 is distinct from Fig. 6 in that the tri-state buffer 27 is not provided because of the absence of the common data buses 17, data transfer paths 34 are provided for PEs in the westerly (W) and easterly (E) direction, output communication units 35 and 36 are provided for selecting between outputting of data input from another PE as it is and outputting of the result of processing by the processor itself, and data from the W or E direction can also be input to the input communication unit 23. The controller 30 for this embodiment is the same as that in Fig. 7, and hence explanation of control signals from the controller 30 is omitted. It is natural for control signals from the data transfer controller 31 to be input to two additional output communication units 35 and 36.

When the processor elements shown in Fig. 9 are arranged in an array as shown in Fig. 8, controlling the outputs of the output communication units 35 and 36 eliminates the need of use of two or more buses for each of the processor elements, for example, PE1, PE2 and PE3. One data transfer path 34 suffices, permitting the number of wiring lines to be decreased. In addition, controlling the outputs of the output communication units 35 and 36 permits parallel operation in word units (in units of processor elements in each column), increasing the degree of parallelism.

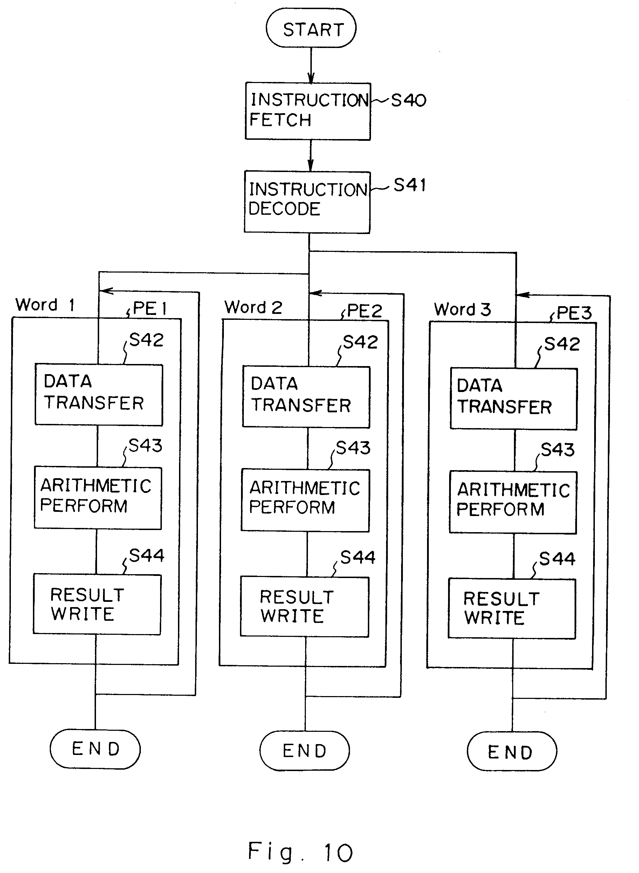

Fig. 10 is a flowchart of an embodiment of the data parallel processing of the present invention. In the figure, an instruction is fetched in step S40. The instruction is decoded in step S41. According to the instruction various control signals are sent from each controller to groups of word-unit processor elements PE1 in the top-to-bottom direction in Fig. 5 or Fig. 8. Transfer of necessary data in step S42, performing arithmetic using the data transferred in step S42, and storage of the result of the arithmetic in step S44 are performed for each of groups of the word-unit processor elements PE1 in the top-to-bottom direction, and then processing terminates. The processing is repeated a number of times necessary to the instruction as required. Fig. 10 shows the case where parallel operation is performed in word units. The processor element groups (only one in each group is indicated) arranged in the direction of column can not only transfer a carry signal within one word but also perform parallel operation between processor elements in the direction of the column in the case of, for example, bit-by-bit comparison, permitting the degree of parallel of the processor elements to be much improved.

In the present invention, in performing writing of the result of arithmetic (S44) after performing the arithmetic (S43), the time required to transfer data is almost negligible. The reason is that, since the output of the 1-bit arithmetic unit 21 is directly connected to the 1-bit memory unit 22, time is not required to control storage locations in the register file, as required in the prior art, the common bus is not used on a time-sharing basis in transferring the results of arithmetic from the arithmetic units to the register file, and data transfers are not delayed. In addition, the PEs themselves are capable of not only high-speed operation but also parallel operation when arranged in an array, thus much increasing the speed of processing.

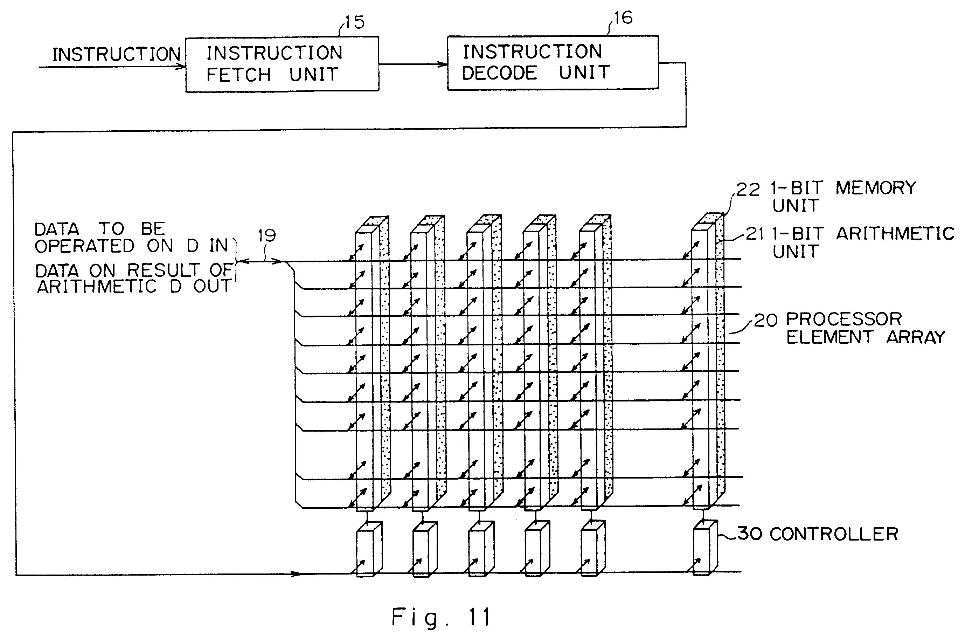

Fig. 11 is a diagram for use in supplemental explanation of the flowchart of Fig. 10. In the figure, each controller 30 sends various control signals to processor elements in the top-to-bottom direction, that is, to a processor element array 20, in accordance with the result of decoding of an instruction by the instruction decode unit 16. Each 1-bit arithmetic unit 21 comprising the processor element array 20 performs arithmetic using input data DIN to be operated on which is externally input over the I/O bus 19. The result is output to outside via the 1-bit memory unit 22 as arithmetic result data DOUT.

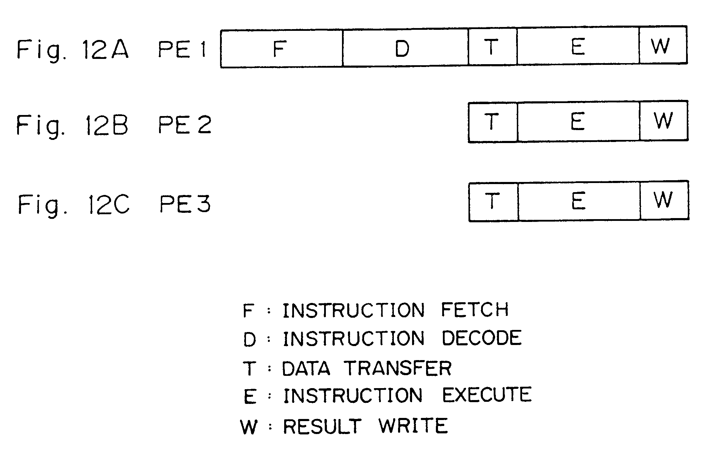

Figs. 12A, 12B and 12C are diagrams for use in explanation of stages of pipeline processing according to the present invention which is performed in the processor elements PE1, PE2 and PE3 arranged in the direction of a row. In the figure, data transfer (T) is pipeline-processed subsequent to the two stages of instruction fetching (F) and decoding (D). Control signals from the instruction decode unit are applied to the processor elements PE1, PE2 and PE3 in parallel, so that the execution of arithmetic (E) and the writing of the result (W) are processed in parallel in the processor elements. Since the data transfer (T) time after the execution (E) can almost be neglected, the writing (W) of the result can be performed very fast.

Next, in the present invention, the processor elements arranged in a two-dimensional matrix with n rows and m columns can substantially be split into groups of processor elements for respective independent arithmetic operations.

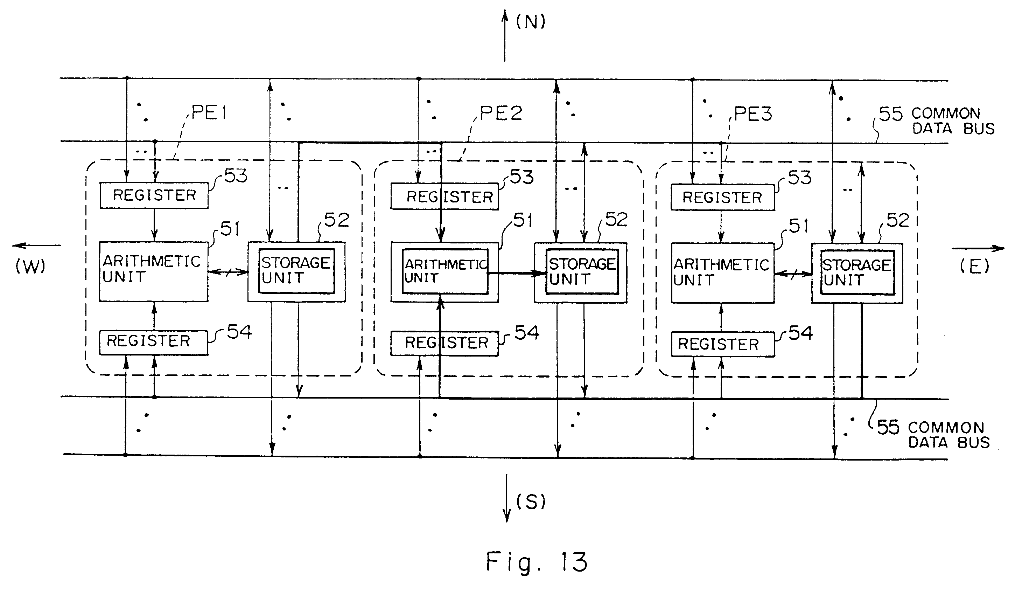

Fig. 13 is a diagram for use in explanation of an embodiment of such split usage of a parallel data processing system, which illustrates provision of more than one common data bus 55 for processor elements arranged from left to right. That is, this embodiment can be considered as including more than one common data bus in the embodiment of the first parallel data processing system (Fig. 5) in which one common data bus 17 is provided for processor elements in the left-to-right direction.

In Fig. 13, there are shown, for simplicity, three processor elements PE1, PE2 and PE3 in the left-to-right direction and only one processor in the top-to-bottom direction. However, 32 elements exist both in the left-to-right direction and in the top-to-bottom direction. The PEs in the top-to-bottom direction constitute one word. Each element (PE) is shown, for simplicity, as comprising an arithmetic unit 51 corresponding to the 1-bit arithmetic means of Fig. 3, a storage unit 52 corresponding to the storage means, and registers 53 and 54 which temporarily store operand data transferred from other PEs over the common data buses 55 and whose stored contents are read out by high-speed clocks at arithmetic time. In this example, the communication units in Fig. 6 are omitted. In addition, although a plurality of common data buses are shown above (N) and below (S) the PEs, as the common data buses 55, this is not restrictive.

It is assumed that the system is split for use, and the common data buses 55 are larger in number than is necessary to an instruction to perform simultaneous parallel arithmetic.

In Fig. 13, for example, data "A" is transferred from the storage section 52 in PE1 on the left (W) to the register 53 in PE2 over the upper common data bus 55. And data "B" is transferred from the storage section 52 in the PE3 on the right (E) to the register 54 in the PE2 over the lower common data bus 55. For example, arithmetic "A + B" is performed by the arithmetic unit 51 in the PE2 and then the result is stored in the storage unit 52 in the PE2.

At the same time as such operations are performed by the PE1 to PE3, PE4 to PE6 (assumed to be to the right of the PE3), not shown, can execute addition of two pieces of data "C" and "D" in exactly the same manner. In this case, out of the common data buses 55, buses that are not used by the PE1 to PE3 are used by the PE4 to PE6, which substantially splits the parallel data processing system for use and ensures very efficient system usage.

When the processor elements, as shown in Fig. 9, are arranged in an array as shown in Fig. 8, the processor elements can be split in word units and operated in parallel in the same manner as described above by controlling the output communication units for the E and W directions.

According to the present invention, naturally the processor element shown in Fig. 6 which uses common data buses and the processor element shown in Fig. 9 which uses an inter-processor element transfer path in the direction of row may be combined into one processor element, and the resulting processor elements may be arranged in an array.

### Industrial Applicability

According to the present invention, the result writing (W) stage can be speeded up in each PE, and the degree of parallelism can be improved by arranging PEs in an array to much increase the speed of data arithmetic operation. Moreover, the device of the present invention is suitable for a one-chip integrated circuit version because common data buses and inter-PE transfer paths are able to be wired regularly in the left-to-right and the top-to-bottom direction and PEs can be formed in the same pattern. Furthermore, since the need for a large number of bus lines to be driven to transfer data as in a conventional parallel data processor is eliminated, the processing speed also improves.

Accordingly, the data processors of the present invention can be used in various types of parallel data processing systems such as an image processing system, etc.

## Claims

1. A processor element characterized by comprising:
arithmetic means (11) for performing arithmetic on data to be operated on;
storage means (12) for storing the data to be operated on or the result of the arithmetic;
communication means (13) for permitting communication between said arithmetic means (11) and another processor element; and
access means for accessing said storage means (12) independently of said communication means.

2. A processor element according to claim 1, characterized in that said arithmetic means is one bit.

3. A processor element according to claim 1, characterized in that said storage means is one bit.

4. A processor element according to claim 1, characterized in that said storage means stores data of one or more bits to be operated on and/or the result of the arithmetic.

5. A processor element according to claim 1, characterized in that said storage means (12) stores data to be operated on as a result of a communication process of said communication means (13) or data to be operated on which is externally input without being routed through said communication means (13).

6. A processor element according to claim 1, characterized in that said communication means is connected to a data transfer line for transferring a carry and to a common bus.

7. A processor element according to claim 1, characterized in that said communication means is connected to a data transfer line for transferring a carry transfer line and a data transfer line to an adjacent processor element.

8. A processor element comprising:
an arithmetic unit;
a memory unit connected to said arithmetic unit;
a communication unit for selectively bypassing communication between said arithmetic unit and another processor element and data; and
an interface for accessing said memory unit independently of said communication unit.

9. A data processor having processor elements arranged in a matrix characterized in that
each of said processor elements comprises:
arithmetic means (11) for performing arithmetic on data to be operated on;
storage means (12) for storing the data to be operated on or the result of the arithmetic;
communication means (13) for permitting communication between said arithmetic means (11) and another processor element; and
access means for accessing said storage means (12) independently of said communication means,
a signal generated by each of said processor elements being transferred in the direction along a column and common buses being provided in the direction along a row to thereby execute arithmetic operation in parallel.

10. A data processor according to claim 9, characterized by providing at least as many common data buses as there are simultaneous parallel arithmetic operations along first, second and third processor elements arranged in a row, and performing an arithmetic operation in parallel which performs arithmetic on the contents of said storage unit of said first processor element and the contents of said storage unit of said second processor element in said arithmetic unit of said third processor element and stores the result of the arithmetic in said storage unit of said third processor element.

11. A data processor according to claim 9, characterized in that said processor elements arranged in a matrix are assembled into one chip.

12. A data processor according to claim 9, characterized in that said parallel arithmetic operation is performed by causing each column of processor elements to perform arithmetic corresponding to one instruction fetched in parallel.

13. A data processor according to 9, characterized in that said parallel arithmetic operation is performed on a pipeline basis.

14. A data processor according to claim 9, characterized in that one controller is provided for each group of processor elements arranged in a column, and said controller comprises a common bus controller for determining whether the result of arithmetic is to be output onto a common bus line, an arithmetic controller for controlling what arithmetic is to be performed by said arithmetic unit, and a memory I/O controller for performing control between a memory and an I/O bus.

15. A data processor having processor elements arranged in a matrix characterized in that
each of said processor elements comprises:
arithmetic means (11) for performing arithmetic on data to be operated on;
storage means (12) for storing the data to be operated on or the result of the arithmetic;
communication means (13) for permitting communication between said arithmetic means (11) and another processor element; and
access means for accessing said storage means (12) independently of said communication means,
a signal generated by each of said processor elements being transferred in the direction of a column and data being transferred in the direction of a row to thereby execute arithmetic operation in parallel.

16. A data processor according to claim 15, characterized by providing at least as many common data buses as there are simultaneous parallel arithmetic operations along first, second and third processor elements arranged in a row, and executing an arithmetic operation in parallel which performs arithmetic on the contents of said storage unit of said first processor element and the contents of said storage unit of said second processor element in said arithmetic unit of said third processor element and stores the result of the arithmetic in said storage unit of said third processor element.

17. A parallel data processing system characterized by comprising:
n x m unit data processor elements comprising m sets of n unit data processing elements connected by a data transfer path,
n common data buses (17) each for m corresponding unit data processor elements in m sets of n unit data processor elements;
an instruction fetch unit (15) for fetching an instruction;
an instruction decode unit (16) for decoding the instruction fetched by said instruction fetch unit (15); and
m processor element controllers (30) for outputting a control signal for data processing to each of n unit data processor elements in each of said m sets according to the instruction decoded by said instruction decode unit (16).

18. A parallel data processing system according to claim 17, characterized in that each of said data processor elements comprises:
a 1-bit arithmetic unit (21) for performing arithmetic on 1-bit data to be operated on;
a 1-bit memory unit (22) for storing an output of said 1-bit arithmetic unit (21) or data input from the outside of the system and outputting the stored content to said 1-bit arithmetic unit (21);
a read/write interface (24) for controlling data input/output between said 1-bit memory unit (22) and the outside of the system;
an input communication unit (23) for inputting data other than a carry input which is input from said common data buses (17) or an adjacent unit data processor element of said n unit data processor elements to said 1-bit arithmetic unit (21) and inputting a carry input from said adjacent data processor element to a carry input terminal (23) of said 1-bit arithmetic unit (21);
an output communication unit (25) for selectively outputting a carry output of said 1-bit arithmetic unit (21) or an output of said 1-bit memory unit (22) to said adjacent data processing element; and
a tri-state buffer (27) for outputting an output of said 1-bit memory unit (22) to said common data buses (17).

19. A parallel data processing system according to claim 17, characterized in that each of said m processor element controllers (30) for each of m sets of n data processor elements comprises:
a memory controller (33) for outputting a data input/output control signal to said read/write interface (24);
an arithmetic controller (32) for outputting an arithmetic control signal to said 1-bit arithmetic unit (21) and said input communication unit (23); and
a data transfer controller (31) for outputting a data transfer control signal to said input communication unit (23), an output communication unit (25) and said tri-state buffer (27).

20. A parallel data processing system according to claim 17, characterized in that each of said m sets of unit data processing elements are in charge of processing data in word units, and processes (S42 to S44) of, according to an instruction fetched by said instruction fetch unit (15) and decoded by said instruction decode unit (16), performing necessary data transfers between unit bit-corresponding data processing units in said m sets of unit data processing units (S42), performing arithmetic by each unit data processing unit (S43), and storing the result of arithmetic in storage means (S44) are performed a required number of times according to the contents of the instruction decoded.

21. A parallel data processing system according to claim 17, characterized in that, in place of one common data bus for each set of m corresponding unit data processor elements in said m sets of n unit data processor elements, at least a plurality of (l) common data buses required at a time of execution of simultaneous parallel arithmetic instruction are provided, and the total number of n x l common data buses (55) are provided.

22. A parallel data processing system comprising:
n x m unit data processor elements arranged in a two-dimensional matrix with n columns and m rows, said elements being connected by first m data transfer lines in the direction along a column and by second n data transfer lines in the direction along a row;
an instruction fetch unit (15) for fetching an instruction;
an instruction decode unit (16) for decoding the instruction fetched by said instruction fetch unit (15); and
m processor element controllers (30) each for outputting a control signal for data processing to n unit data processing units in a corresponding one of m columns.

23. A parallel data processing system according to claim 22, characterized in that each of said data processor elements comprises:
a 1-bit arithmetic unit (21) for performing arithmetic on 1-bit data to be operated on;
a 1-bit memory unit (22) for storing an output of said 1-bit arithmetic unit (21) or data input from the outside of the system and outputting the stored content to said 1-bit arithmetic unit (21);
a read/write interface (24) for controlling data input/output between said 1-bit memory unit (22) and the outside of the system;
an input communication unit (23) for inputting data other than a carry input which is input from an adjacent unit data processor element of n unit data processor elements in the direction along a column or m unit data processor elements in the direction along a row to said 1-bit arithmetic unit (21) and inputting a carry input from said adjacent data processor element to a carry input terminal (23) of said 1-bit arithmetic unit (21);
an output communication unit (25) for selectively outputting a carry output of said 1-bit arithmetic unit (21) or an output of said 1-bit memory unit (22) to said adjacent data processing element in the direction along a column; and
second and third output communication units (35, 36) for selectively outputting data input from an adjacent unit data processor element of m data processor elements in a row or an output of said 1-bit memory unit (22) to said adjacent unit data processor elements in the direction opposite to said adjacent unit data processor element of m data processor elements in a row.

24. A parallel data processing system according to claim 22, characterized in that each of m PE controllers (30) for m sets of n unit data processor elements comprises a memory controller (33) for outputting a data input/output control signal to said read/write interface (24), an arithmetic controller (32) for outputting an arithmetic control signal to said 1-bit arithmetic unit (21) and said input communication unit (23), and a data transfer controller (31) for outputting a data transfer control signal to said input communication unit (23) and said first, second and third output communication units (25, 35, 36).

25. A parallel data processing system according to claim 22, characterized in that each of said m sets of n unit data processing elements are in charge of processing data in word units, and processes (S42 to S44) of, according to an instruction fetched by said instruction fetch unit (15) and decoded by said instruction decode unit (16), performing necessary data transfers between bit-corresponding data processing units in said m sets of unit data processing units (S42), performing arithmetic by each unit data processing unit (S43), and storing the result of arithmetic in storage means (S44) are performed a required number of times according to the contents of the instruction decoded.

26. A data processing method characterized by comprising the steps of:
performing arithmetic processing on data bit by bit on the basis of an instruction;
writing the result of the arithmetic into a 1-bit memory; and
transferring data read out of said 1-bit memory to outside, thereby performing unit data processing.

27. A data processing method according to claim 26, characterized in that said unit data processing in each of processor elements arranged in an array, processing of one word is performed by processor elements in a column, and two or more words are processed in parallel.
